# NEUE EUROPÄISCHE PATENTSCHRIFT

(11) **EP 2 807 914 B2**
(45) Veröffentlichungstag und Bekanntmachung des Hinweises auf die Entscheidung über den Einspruch: **20.03.2019**
(45) Hinweis auf die Patenterteilung: 30.03.2016
(21) Anmeldenummer: 13169382.2
(22) Anmeldetag: 27.05.2013
(51) Int. Cl.: A01C 7/04, A01C 7/10, A01C 7/20

(54) **Säherzsteuerungseinrichtung, Säherz und Einzelkornsämaschine**
Seed spreader control device, seed spreader and single grain seeder
Dispositif de commande de coeur de semeuse, coeur de semeuse et semeuse de grain individuel

(43) Veröffentlichungstag der Anmeldung: 03.12.2014
(73) Patentinhaber: Kverneland AS, 4355 Kvernaland (NO)
(72) Erfinder: Schanzenbach, Volker, 49170 Hagen a.T.W. (DE); Schumacher, Ferdinand, 59510 Lippetal-Oestinghausen (DE)
(74) Vertreter: Schweiger, Johannes

(56) Entgegenhaltungen:
- EP-A1- 1 749 428
- EP-A2- 1 889 532
- EP-B1- 1 637 026
- WO-A1-2008/135772
- WO-A1-2008/155235
- DE-A1-102004 011 302
- DE-A1-102004 045 655
- DE-A1-102011 001 949
- US-A1- 2007 266 917

## Beschreibung

Die Erfindung betrifft eine Säherzsteuerungseinrichtung gemäß Patentanspruch 1, ein Säherz gemäß Patentanspruch 4 und eine Einzelkornsämaschine gemäß Patentanspruch 5.

Überwachungseinrichtungen zur Überwachung der Funktion von Einzelkornsämaschinen sind in verschiedenen Ausführungen bekannt. Häufig wird die Überwachung wegen der einfachen Zugänglichkeit an einem Förderkanal durchgeführt, wie beispielsweise bei der Druckschrift WO 2005/096799 A1 oder der WO 2005/096798 A1. Druckschrift DE 198 45 860 A1 offenbart eine Säherzsteuerungseinrichtung gemäß dem Oberbegriff des Anspruchs 1.

Überwachungseinrichtungen dienen unter anderem der Steuerung und Regelung sowie der Überprüfung der korrekten Funktion der Sägeräte. Es besteht die Forderung, dass die Überwachung schnell anspricht und einwandfrei sowie auf einfache Weise funktioniert. Weiterhin soll die Überwachungseinrichtung möglichst kostengünstig und wartungsfrei arbeiten.

Die DE 10 2011 001 949 A1 beschreibt eine Säherzüberwachungseinrichtung für ein Säherz, wobei von einer Zeilenkamera erzeugte Impulse durch eine Auswerteeinheit ausgewertet werden, um die Belegung jedes Säloches unmittelbar nach Erfassung, also on-line auszuwerten.

Aufgabe der vorliegenden Erfindung ist es daher, eine Säherzsteuerungseinrichtung anzugeben, mit der ein besseres Säergebnis erreicht wird.

Diese Aufgabe wird mit den Merkmalen der Patentansprüche 1, 4 und 5 gelöst. Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren angegebenen Merkmalen. Soweit Wertebereiche angegeben sind, sollen auch etwaige Zwischenwerte als Grenzwerte mit offenbart gelten.

Grundidee der vorliegenden Erfindung ist es, durch eine Auswertung der Belegung eines oder mehrerer Löcher, insbesondere einer Gruppe von Sälöchern, die Belegung der Sälöcher beeinflussende Betätigungselemente derart zu steuern, dass jedes Säloch möglichst immer mit einem einzigen Saatgutkorn belegt ist. Die Steuerung kann somit während der Ausbringung einer bestimmten Saatgutart automatisiert erfolgen, ohne dass während der Ausbringung des Saatguts auf Grund einer Fehlbelegung von Hand eingegriffen werden muss oder ein Abschalten des Sägerätes notwendig wäre. Insbesondere kann die Säherzsteuerungseinrichtung auf Basis der Daten der Auswerteeinheit im laufenden Betrieb eine Auswertung einzelner Sälöcher oder vorzugsweise von Sälochgruppen vornehmen und unmittelbar die Belegung auf Grund der die Belegung beeinflussenden Betätigungselemente ändern. Bevorzugt sind Ausgangsparameter für den Betrieb des Säherzes voreinstellbar oder abhängig vom gewählten Saatgut voreingestellt, insbesondere Druck/Unterdruck eines Gebläses zur Erzeugung von Unterdruck an den Sälöchern der Säscheibe und/oder eine Klappenstellung am Gebläse zur Einstellung des Unterdrucks an den Sälöchern oder des Verhältnisses von Druck zu Unterdruck und/oder eine Position eines Abstreifers zum Abstreifen von überschüssigem Saatgut an Sälöchern der Säscheibe.

Die Steuerung durch die Säherzsteuerungseinrichtung kann erfindungsgemäß insbesondere wie folgt ablaufen:
- Ermittlung eines Belegungsistwerts der Belegung eines oder mehrerer Sälöcher, insbesondere einer Gruppe von Sälöchern, und Auswertung durch die Auswerteeinheit,
- soweit eine Unter- oder Überbelegung der einzelnen Sälöcher oder der Sälöchergruppe festgestellt wird, werden voreingestellte Regelgrößen von Betätigungselementen in definierten Schrittgrößen abhängig von den durch die Auswerteeinheit ermittelten Unter- oder Überbelegungen verändert,
- Wiederholung der obengenannten Schritte, insbesondere laufend oder in voreingestellten Intervallen während des Betriebs des Säherzes.

Erfindungsgemäß ist die Säherzüberwachungseinrichtung so ausgebildet, dass von einer Strahlungsquelle erzeugte elektromagnetische Wellen nach Reflektion an einer Reflexionsfläche der rotierbaren Säscheibe von einer Zeilenkamera erfassbar und von der Auswerteeinheit auswertbar sind. Hierdurch ist die Auswertung und Steuerung in-line mit äußerst schnellen unmittelbaren Reaktionszeiten umsetzbar. Es wird insofern auf die Offenbarung der DE 10 2011 001 949 A1 Bezug genommen.

Soweit die Betätigungselemente mindestens einen in Richtung der Säscheibe verstellbaren Abstreifer zum Abstreifen von überschüssigem Saatgut an der Säscheibe umfassen, kann nicht nur unmittelbar auf die Belegung eingewirkt werden, indem der Abstreifer in Richtung der Säscheibe verstellt wird, also der Abstand zwischen der Säscheibe und einer Abstreiffläche des Abstreifers vergrößert oder verkleinert wird, sondern auch eine etwaige Abnutzung des Abstreifers automatisiert berücksichtigt werden. Insbesondere wird ein Verstellbereich (Korridor) festgelegt, innerhalb dessen eine Verstellung des Abstreifers durch die Säherzsteuerungseinrichtung zulässig ist, welcher vorzugsweise abhängig von der Saatgutart als Verstellbereich hinterlegt ist. Bei Überbelegung eines oder mehrerer Sälöcher wird der Abstand zwischen der Abstreiffläche des Abstreifers und der Säscheibe automatisch verringert und bei Unterbelegung entsprechend vergrößert.

Erfindungsgemäß umfassen die Betätigungselemente mindestens eine in einem Aufnahmeabschnitt zur Aufnahme des Saatguts an der Säscheibe angeordnete Rührwelle zur Bewegung des Saatguts. Eine zusätzlich zu der natürlichen Bewegung des Saatguts entlang der Säscheibe erfolgende, insbesondere quer dazu verlaufende Bewegung des Saatguts führt zu einer besseren Belegung der Sälöcher, insbesondere bei einer Unterbelegung. In diesem Fall kann insbesondere eine Drehzahl der Rührwelle vergrößert werden. Insbesondere verläuft eine Achse der Rührwelle in Radialrichtung zur Säscheibe und parallel zu einer Flachseite der Säscheibe. Insbesondere ist ein Rührabschnitt der Rührwelle in einem Vorratsbereich des Säherzes, vorzugsweise im Bereich eines Zulaufs des Saatguts, angeordnet.

In einer weiteren, vorteilhaften Ausführungsform umfassen die Betätigungselemente alternativ oder zusätzlich zu dem verstellbaren Abstreifer einen Gebläsemotor zur Erzeugung von Unterdruck an den Sälöchern. Erfindungsgemäß kann durch die Steuerung des Gebläsemotors der an den Sälöchern anliegende Unterdruck zur Aufnahme des Saatguts an den Sälöchern gesteuert werden. Wird von der Auswerteeinheit eine Unterbelegung festgestellt, wird der Unterdruck erhöht und im Falle einer Überbelegung wird der Unterdruck reduziert, insbesondere im Bereich eines, vorzugsweise bezogen auf das jeweilige Saatgut, festgelegten Unterdruckbereiches (Korridor).

Erfindungsgemäß bevorzugt wird eine Kombination aus dem verstellbaren Abstreifer, der Rührwelle und der Ansteuerung des Gebläsemotors als Betätigungselemente vorgesehen, so dass insbesondere Steuerungsprioritäten festlegbar sind und/oder eine Steuerungssequenz im Falle einer Unterbelegung und/oder einer Überbelegung, vorzugsweise jeweils separat, festlegbar ist/sind, vorzugsweise abhängig vom jeweiligen Saatgut.

Im Falle einer, insbesondere statistisch signifikanten, Unterbelegung ist erfindungsgemäß insbesondere folgendes Verfahren denkbar:
1. Rührwelle einschalten oder Rührwellendrehzahl erhöhen, insbesondere in Stufen bis zu einer maximal eingestellten Drehzahl, insbesondere abhängig von der Saatgutart,
2. falls noch immer eine, insbesondere statistisch signifikante, Unterbelegung festgestellt wird, Verringerung des Abstands des Abstreifers zur Säscheibe, insbesondere bis zu einem minimalen Abstand, vorzugsweise abhängig vom Saatgut voreingestellt,
3. falls immer noch eine, insbesondere statistisch signifikante, Unterbelegung von der Auswerteeinheit festgestellt wird, Erhöhung der Drehzahl des Gebläses und dadurch Verringerung des Drucks (Erhöhung des Unterdrucks) an den Sälöchern.

Im Falle einer, insbesondere statistisch signifikanten, Überbelegung kann insbesondere in umgekehrter Reihenfolge verfahren werden.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1a und 1b: perspektivische Ansichten einer Ausführungsform eines Einzelkornsäaggregats einer gattungsgemäßen Einzelkornsämaschine mit einem Säherz in Fahrtrichtung von schräg hinten (Figur 1a) und von schräg vorne (Figur 1b),

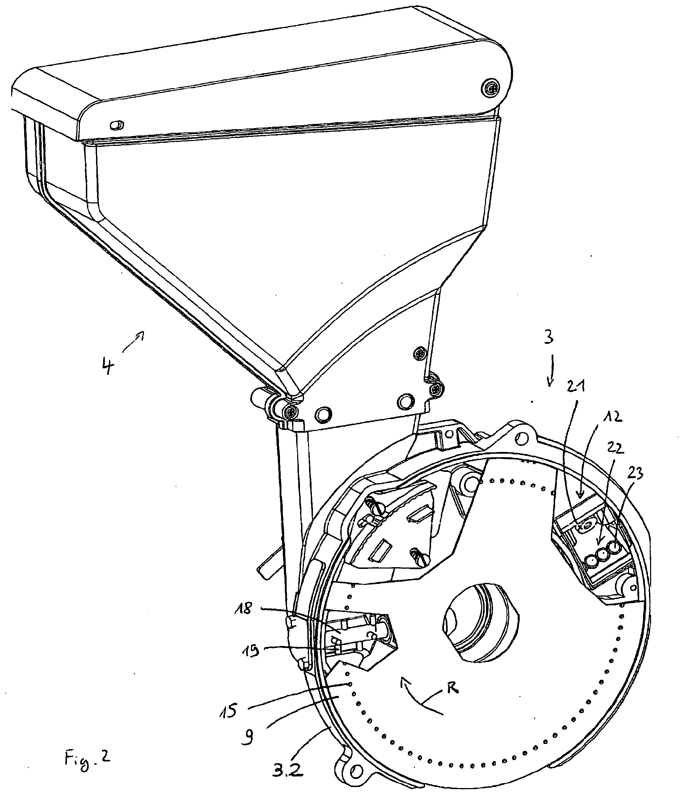

- Figur 2: eine perspektivische Ansicht des Säherzes der Ausführungsform gemäß Figur 1 mit geöffnetem Säherz und einer teilweise dargestellten Säscheibe mit Sälöchern und

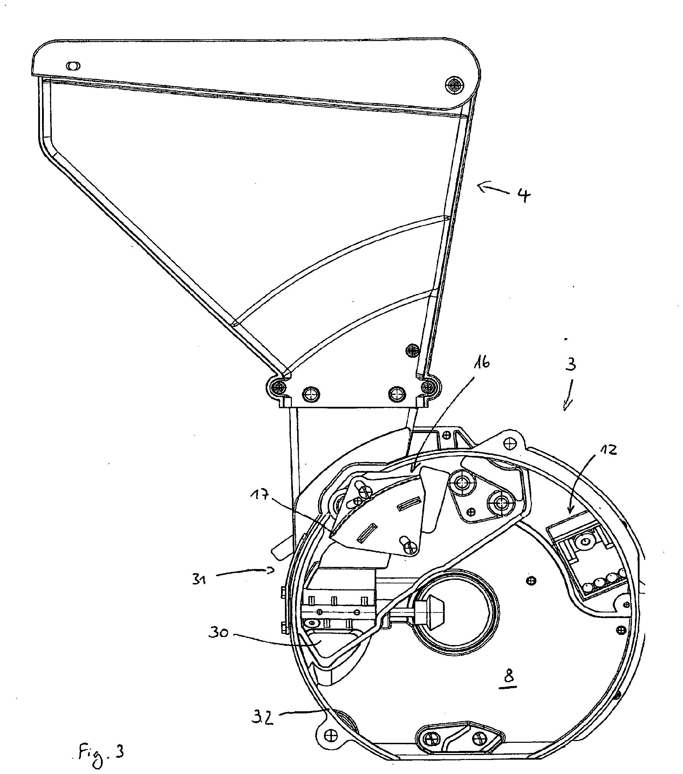

- Figur 3: eine Seitenansicht des Säherzes gemäß Figur 1 mit geöffnetem Säherz,

In den Figuren sind gleiche Bauteile und Bauteile mit der gleichen Funktion mit den gleichen Bezugszeichen gekennzeichnet.

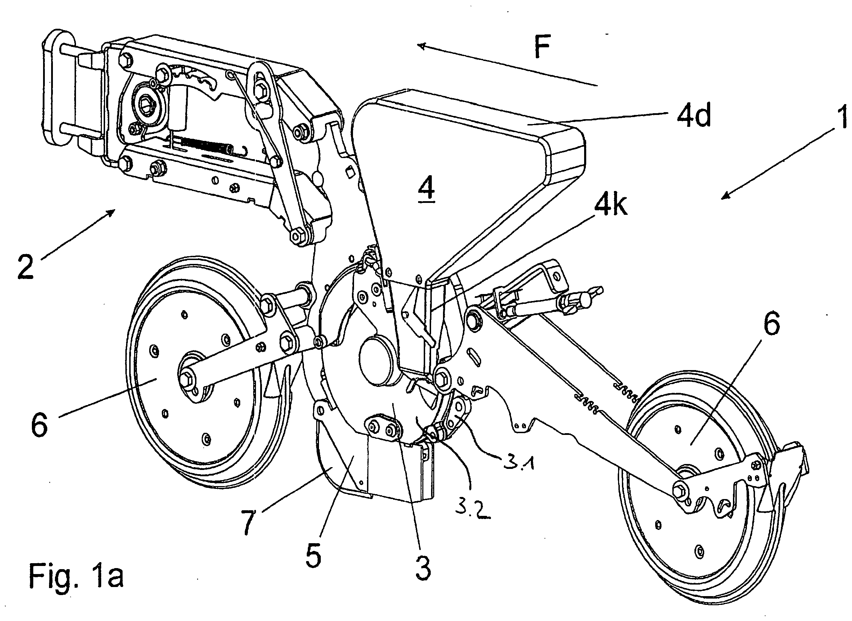

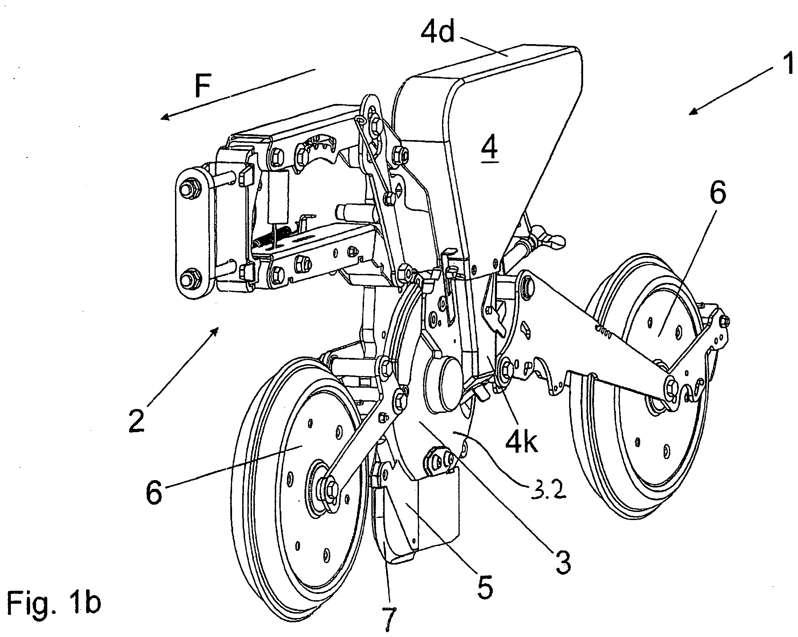

In der Figuren 1a und 1b ist ein Säaggregat 1 einer erfindungsgemäßen Einzelkornsämaschine dargestellt, das über einen Arm 2 am Rahmen der Einzelkornsämaschine befestigt ist. Dementsprechend ist die Fahrtrichtung bei Betrieb der Einzelkornsämaschine in der durch den Pfeil F angegebenen Richtung.

An dem Arm 2, der eine Schwenkbewegung, vorzugsweise als Vertikalbewegung durch Ausbildung des Arms 2 als Parallelogrammarm, zulässt, sind ein Säherz 3, ein oberhalb des Säherzes 3 angeordneter Tank 4, ein unterhalb des Säherzes 3 angeordnetes Säschar 5 sowie zwei in Fahrtrichtung F vor und hinter dem Säherz 3 angeordnete, gegenüber dem Säherz 3 schwenkbare Laufräder 6 angebracht. Der Tank 4 ist über einen Deckel 4d verschließbar und mit Saatgut befüllbar, das wiederum über einen Kanal 4k seitlich in das Säherz 3 geführt wird.

Das Saatgut wird im Säherz 3 vereinzelt und über das Säschar 5 in eine durch eine Scharspitze 7 des Säschars 5 geöffnete Furche im Ackerboden abgelegt.

Das Säherz 3 besteht aus einer ersten Hälfte 3.1 und einer zweiten Hälfte 3.2, die ein Säherzgehäuse und einen darin befindlichen Arbeitsraum 8 definieren. Der Arbeitsraum 8 wird durch eine Säscheibe 9 in eine Druckseite und eine Saatgutseite unterteilt.

Konzentrisch zur kreisförmigen Säscheibe 9 sind am Umfang der Säscheibe 9 Sälöcher 15 verteilt (Sälochkreis), durch welche die Druckseite und die Saatgutseite verbunden sind. Ansonsten sind die Druckseite und die Saatgutseite durch die Säscheibe 9 und entsprechende Dichtungen voneinander abgedichtet.

In der Hälfte 3.2 kommt das Saatgut von dem Tank 4 über einen Zulauf 30 in einem Aufnahmeabschnitt 31 zur Aufnahme des Saatguts an der Säscheibe 9 an. Zumindest im Aufnahmeabschnitt 31 liegt an den Sälöchern 15 ein Unterdruck an, der durch einen Unterdruckbereich der ersten Hälfte 3.1 erzeugt wird. An den Unterdruckbereich ist ein Gebläsemotor angeschlossen, der von der Säherzsteuerungseinrichtung steuerbar ist.

Die Sälöcher 15 weisen je nach zu vereinzelndem Saatgut geeignete Durchmesser auf, die insbesondere im Bereich von 0,5 mm bis 3 mm liegen.

Idealerweise nimmt jedes Säloch 15 ein einziges Saatkorn auf, was insbesondere wegen der unterschiedlichen Ausprägung der Saatkörner jedes Saatguts in der Praxis nicht immer zu 100 % funktioniert. Je nach verwendetem Saatgut und abhängig von der Einstellung des Säherzes 3 und der Fahrgeschwindigkeit kommt es vor, dass ein Säloch 15 kein Saatkorn oder sogar mehrere Saatkörner aufnimmt. Dies führt an der entsprechenden Sästelle im Ackerboden dazu, das entweder keine Pflanze entsteht oder zwei Pflanzen, die nicht ausreichend mit Nährstoffen versorgt werden und daher unterentwickelt bleiben.

Besonders kritisch ist es jedoch, wenn einzelne Säaggregate einer Einzelkornsämaschine vollständig ausfallen, beispielsweise durch eine Funktionsstörung oder hohen Verschmutzungsgrad.

Die Säherzsteuerungseinrichtung umfasst bei der gezeigten Ausführungsform insbesondere folgende Bestandteile:
1. eine Säherzüberwachungseinrichtung 12 zur Ermittlung der Belegung der Sälöcher 15 der rotierenden Säscheibe mit Saatkörnern im Betrieb,
2. einem verstellbaren Abstreifer 16 mit einer Abstreiffläche 17 zum Abstreifen von überschüssigem Saatgut an der Säscheibe 9,
3. einer Rührnoppen 19 aufweisenden Rührwelle 18 zur Verstärkung der Bewegung des Saatguts im Aufnahmeabschnitt 31,
4. dem Gebläse zur Erzeugung des Unterdrucks an den im Aufnahmeabschnitt 31 angeordneten Sälöchern 15,
5. einer nicht dargestellten Steuerungseinrichtung, die insbesondere die Auswerteeinheit umfasst, vorzugsweise softwaregesteuert.

Die Rührwelle 18 befindet sich im Bereich des Zulaufs 30 und/oder am in Rotationsrichtung R liegenden Beginn des Aufnahmeabschnitts 31. Der Bereich des Zulaufs 30 ist insbesondere mit einer Füllstandsüberwachung versehen, um einer zu starken Förderwirkung der Rührwelle entgegen zu wirken. Wenn die Füllstandsüberwachung ein entsprechendes Signal gibt, daß sich im Bereich des Zulaufs 30 kein oder zu wenig Saatgut befindet, wird die Drehzahl der Rührwelle 18 reduziert oder die Rotation der Rührwelle 18 gestoppt.

Der Abstreifer 16 ist in Rotationsrichtung R vorzugsweise zwischen der Rührwelle 18 und der Säherzüberwachungseinrichtung 12 angeordnet, insbesondere näher an der Rührwelle 18 als an der Säherzüberwachungseinrichtung 12.

Der Abstreifer 16 weist im gezeigten Ausführungsbeispiel ein Abstreifelement auf, das quer zur Rotationsrichtung beziehungsweise Rotationsebene verstellbar ist, um einen Abstand zwischen der Abstreiffläche 17 und der Säscheibe 9 einstellen zu können.

Soweit die Säscheibe 9 zwei Sälochkreise mit Sälöchern 15 aufweist, weist der Abstreifer 16 bevorzugt zwei Abstreifelemente auf, die gekoppelt sind und/oder zueinander verstellbar ausgebildet sind. Bevorzugt sind die Abstreifelemente, insbesondere gemeinsam, in Richtung der Säscheibe federbeaufschlagt.

Die Säherzüberwachungseinrichtung 12 ist insbesondere an einem in Rotationsrichtung R liegenden Ende des Aufnahmeabschnitts 31 angeordnet, da an dieser Stelle möglichst ein einziges Saatkorn an jedem Säloch 15 aufgenommen sein soll und dies somit ein optimaler Ort zur Erfassung der Belegung jedes Säloches 15 oder einer Gruppe von Sälöchern 15 ist. Die Säherzüberwachungseinrichtung 12 umfasst eine Zeilenkamera 21 sowie eine Strahlungsquelle 22, insbesondere bestehend aus vier LEDs 23. Während der Erfassung trifft von der Strahlungsquelle 22 ausgehendes Licht unter einem bestimmten Winkel auf die rotierende Säscheibe 9, die als Reflexionsfläche wirkt. Das Licht wird an der Reflexionsfläche in Richtung der Zeilenkamera 21 reflektiert und von der Zeilenkamera 21 als Kontrastwert erfasst.

Die Strahlungsquelle 22 ist so angewinkelt, dass die von der Strahlungsquelle 22 in Strahlungsrichtung ausgesendeten elektromagnetischen Wellen die Sälöcher 15 der Säscheibe 9 auf der Reflexionsfläche erfassen. Die elektromagnetischen Wellen werden von der Reflexionsfläche anders reflektiert als von den Sälöchern 15. Je nach dem ob an dem erfassten Säloch 15 keins, eins oder zwei Saatkörner anhaften, ergibt sich für jeden Fall eine unterschiedliche Beeinflussung der reflektierten elektromagnetischen Wellen. Die reflektierten elektromagnetischen Wellen werden von der Zeilenkamera 21 erfasst und von der Auswerteeinheit ausgewertet, wobei in vorteilhafter Weise nur Kontraste erfasst werden, da die matte, metallische Säscheibe 9 als ideale Reflexionsfläche einen zu den Sälöchern 15 und den Säkörnern sehr unterschiedlichen Kontrastwert aufweist.

Die Zeilenkamera 21 misst kontinuierlich die Kontrastwerte eines Abschnitts der vorbeirotierenden Säscheibe 9 im Bereich der Sälöcher 15 und bei jedem Säloch 15 ergibt sich ein Anstieg der Kontrastwerte, je nachdem, ob das Säloch 15 nicht, mit einem oder mit zwei Saatkörnern belegt ist.

Es erfolgt insbesondere eine statistische Auswertung der erfassten Werte, insbesondere Kontrastwerte, eines einzelnen Sälochs oder einer Gruppe von Sälöchern, wobei es erfindungsgemäß vorteilhaft ist, Extremwerte unberücksichtigt zu lassen. Abhängig von für verschiedene Saatgüter hinterlegten Werten und ermittelten Standardabweichungen können Grenzwerte in der Auswerteeinheit hinterlegt werden, die insbesondere dem zwei- oder dreifachen der Standardabweichung entsprechen. Auf die Weise können die für jede Grundgesamtheit ermittelten Werte von der Auswerteeinheit einem der drei Fälle keine Belegung, ein Saatkorn oder zwei Saatkörner zugeordnet werden.

Soweit von der Auswerteeinheit eine, insbesondere statistisch signifikante, Unterbelegung und/oder, insbesondere statistisch signifikante, Überbelegung eines Sälochs oder bevorzugt einer Vielzahl von Sälöchern festgestellt wird, werden die die Belegung beeinflussenden Betätigungselemente in der oben beschriebenen Art und Weise angesteuert beziehungsweise entsprechende Regelgrößen verändert. Die jeweiligen Betätigungselemente können selbstregelnd ausgebildet sein.

### Säherzsteuerungseinrichtung, Säherz und Einzelkornsämaschine

### Bezugszeichenliste

- 1: Säaggregat
- 2: Arm
- 3: Säherz
- 3.1: Hälfte
- 3.2: Hälfte
- 4: Tank
- 4d: Deckel
- 4k: Kanal
- 5: Säschar
- 6: Laufräder
- 7: Scharspitze
- 8: Arbeitsraum
- 9: Säscheibe
- 12: Säherzüberwachungseinrichtung
- 15: Sälöcher
- 16: Abstreifer
- 17: Abstreiffläche
- 18: Rührwelle
- 19: Rührnoppen
- 21: Zeilenkamera
- 22: Strahlungsquelle
- 23: LEDs
- 30: Zulauf
- 31: Aufnahmeabschnitt
- R: Rotationsrichtung

## Patentansprüche

1. Säherzsteuerungseinrichtung zur Steuerung eines Säherzes (3) mit einer eine Auswerteeinheit aufweisenden Säherzüberwachungseinrichtung (12) zur Ermittlung der Belegung von Sälöchern (15) einer rotierenden Säscheibe (9) mit einem Saatgut im Betrieb, wobei die Auswerteeinheit einen Belegungsistwert der Belegung eines oder mehrerer Sälöcher (15) liefert, und wobei die Säherzsteuerungseinrichtung abhängig von einer Abweichung des Belegungsistwerts von einem hinterlegten Belegungssollwert der Belegung eines oder mehrerer Sälöcher (15) die Belegung beeinflussende Betätigungselemente steuernd ausgebildet ist, **dadurch gekennzeichnet, dass**
die Säherzüberwachungseinrichtung (12) so ausgebildet ist, dass von einer Strahlungsquelle (22) erzeugte elektromagnetische Wellen nach Reflexion an einer Reflexionsfläche der rotierbaren Säscheibe (9) von einer Zeilenkamera (21) erfassbar und von der Auswerteeinheit auswertbar sind,
wobei die Betätigungselemente mindestens eine in einem Aufnahmeabschnitt (31) zur Aufnahme des Saatguts an der Säscheibe (9) angeordnete Rührwelle (18) zur Bewegung des Saatguts umfassen.

2. Säherzsteuerungseinrichtung nach Anspruch 1, bei der die Betätigungselemente mindestens einen in Richtung der Säscheibe (9) verstellbaren Abstreifer (16) zum Abstreifen von überschüssigem Saatgut an der Säscheibe (9) umfassen.

3. Säherzsteuerungseinrichtung nach einem der vorhergehenden Ansprüche, bei der die Betätigungselemente einen Gebläsemotor zur Erzeugung von Unterdruck an den Sälöchern umfassen.

4. Säherz für eine Einzelkornsämaschine mit
- einer in einer Rotationsrichtung (R) rotierbaren Säscheibe (9) mit einer Vielzahl von konzentrisch zur Säscheibe (9) verteilten Sälöchern (15) zur Anhaftung von einzelnen Säkörnern entlang mindestens eines konzentrischen Sälochkreises und
- einer Säherzsteuerungseinrichtung nach einem der vorhergehenden Ansprüche.

5. Einzelkornsämaschine mit einem Säherz (3) nach Anspruch 4.

## Claims

1. A sowing heart control apparatus for controlling a sowing heart (3) with a sowing heart monitoring apparatus (12) which has an evaluation unit for determining the occupancy of sowing holes (15) of a rotating seed disk (9) with a seed in operation, the evaluation unit delivering an actual value of the occupancy of one or more sowing holes (15), and the sowing heart control apparatus depending on a deviation of the actual occupancy value from a filed setpoint of the occupancy of one or more sowing holes (15) being made to control the actuating elements which influence the occupancy, wherein the sowing heart monitoring apparatus (12) is made such that electromagnetic waves generated by a radiation source (22) after reflection on a reflection surface of the rotatable seed disk (9) can be detected by a line scanning camera (21) and can be evaluated by the evaluation unit, wherein to move the seed the actuating elements comprise at least one stirring shaft (18) which is located in a receiving section (31) for accommodating the seed on the seed disk (9).

2. The sowing heart control apparatus as claimed in claim 1, wherein the actuating elements encompass at least one scraper (16) which can be adjusted in the direction of the seed disk (9) for scraping of excess seed on the seed disk (9).

3. The sowing heart control apparatus as claimed in one of the preceding claims, wherein the actuating elements comprise a fan motor to produce negative pressure on the sowing holes.

4. A sowing heart for a single seed drill with the following:
- a seed disk (9) which can rotate in one direction (R) of rotation with a plurality of sowing holes (15) which are distributed concentrically to the seed disk (9) for adhesion of individual seed grains along at least one concentric sowing hole circle and
- a sowing heart control apparatus as claimed in one of the preceding claims.

5. A single seed drill with a sowing heart (3) as claimed in Claim 4.

## Revendications

1. Dispositif de commande de distributeur de semoir pour la commande d'un distributeur de semoir (3) avec un dispositif de surveillance de distributeur de semoir (12) comportant une unité d'évaluation pour déterminer l'occupation des orifices de semoir (15) d'un disque de semoir (9) rotatif avec un matériau de semence en exploitation, pour lequel l'unité d'évaluation fournit une valeur réelle d'occupation de l'occupation d'un ou plusieurs orifices de semoir (15) et pour lequel le dispositif de commande de distributeur de semoir est constitué de manière à piloter les éléments de commande influençant l'occupation en fonction d'un écart de la valeur réelle d'occupation par rapport à une valeur théorique d'occupation mémorisée de l'occupation d'un ou plusieurs orifices de semoir (15), **caractérisé en ce que** le dispositif de surveillance de distributeur de semoir (12) est constitué de manière que des ondes électromagnétiques produites par une source de rayonnement (22) peuvent être saisies après réflexion sur une surface de réflexion du disque de semoir rotatif (9) par une caméra à lignes (21) et peuvent être évaluées par l'unité d'évaluation, pour lequel les éléments de commande comprennent au moins un arbre agitateur (18) pour bouger les semences, disposé dans une section de réception (31) pour recevoir les semences sur le disque de semoir (9).

2. Dispositif de commande de distributeur de semoir selon la revendication 1, pour lequel les éléments de commande comprennent au moins un racleur (16) déplaçable en direction du disque de semoir (9) pour racler les semences excédentaires sur le disque de semoir (9).

3. Dispositif de commande de distributeur de semoir selon l'une quelconque des revendications précédentes, pour lequel les éléments de commande comprennent un moteur de soufflante pour produire de la dépression sur les orifices de semoir.

4. Distributeur de semoir pour un semoir monograine avec
- un disque de semoir (9) rotatif dans un sens de rotation (R) avec une pluralité d'orifices de semoir (15) répartis de manière concentrique au disque de semoir (9), et
- un dispositif de commande de distributeur de semoir selon l'une quelconque des revendications précédentes.

5. Semoir monograine avec un distributeur de semoir (3) selon la revendication 4.
